# EUROPÄISCHE PATENTSCHRIFT

(11) **EP 0 386 635 B1**
(45) Veröffentlichungstag und Bekanntmachung des Hinweises auf die Patenterteilung: **13.09.1995**
(21) Anmeldenummer: 90104024.6
(22) Anmeldetag: 01.03.1990
(51) Int. Cl.: H04H 1/02, H04N 7/10

(54) **Einrichtung zur Verteilung von Breitbandsignalen über ein verzweigtes Koaxialkabelnetz**
Device for distributing wide-band signals through a branched coaxial-cable network
Dispositif de répartition de signaux à large bande par un réseau ramifié de ligne coaxiale

(30) Priorität: 08.03.1989 DE 3907524
(43) Veröffentlichungstag der Anmeldung: 12.09.1990
(73) Patentinhaber: SIEMENS AKTIENGESELLSCHAFT, 80333 München (DE); KATHREIN-WERKE KG, D-83022 Rosenheim (DE)
(72) Erfinder: Dömer, Josef, D-8021 Hohenschäftlarn (DE); Albert, Richard, D-8209 Stephanskirchen (DE)
(74) Vertreter: Fuchs, Franz-Josef, Dr.-Ing.

(56) Entgegenhaltungen:
- FR-A- 2 558 674
- PATENT ABSTRACTS OF JAPAN, Bd. 11, Nr. 95 (E-492)25. März 1987;& JP-A-61247140

## Beschreibung

Die Erfindung bezieht sich auf eine Einrichtung zur Verteilung von ein vorgegebenes Frequenzband umfassenden, Fernsehund/oder Rundfunksignale enthaltenden Breitbandsignalen über ein über mehrere Netzebenen verzweigtes Koaxialkabelnetz und ein zusätzliches Lichtwellenleiternetz entsprechend dem Oberbegriff des Anspruchs 1.

Eine Einrichtung der vorgenannten Art ist aus der FR-Patent Nr. 2558 674 bekannt. Die dort beschriebene Einrichtung zur Verteilung von einem, Fernseh- und/oder Rundfunksignale enthaltende Breitbandsignal über ein über mehrere Netzebenen verzweigtes Koaxialkabelnetz enthält ebenfalls zur Verteilung zusätzlicher Breitbandsignale ein Lichtwellenleiternetz. Die zusätzlichen Breitbandsignale werden dabei wie die ursprünglichen Signale über ein Koaxialkabelnetz und einen Endverstärker einer Verteilstelle zugeführt, von der die Lichtwellenleiter die Zusatzsignale direkt an eine Teilnehmerstelle ohne weitere Verstärkung weiterleiten.

Eine Einrichtung zur Verteilung von Breitbandsignalen über ein mehrere Netzebenen enthaltendes, mit Breitbandverstärkern und mit Hilfseinrichtungen versehenes verzweigtes Koaxialkabelnetz ist bereits aus der DE-AS 23 64 061 bekannt.

Die bekannte Einrichtung ist in mehrere Netzebenen unterteilt. Die in einer Kopfstelle aufbereiteten Breitbandsignale werden über Zubringer- oder Verteilebenen auf weiterführende Netzebenen verteilt, deren unterste Netzebene von den Teilnehmern gebildet wird. Die Hilfseinrichtungen dienen zur Fernspeisung und Fehlerortung. Die Fernspeiseeinrichtung umfaßt Vorrichtungen zur Einspeisung der Fernspeiseenergie und Fernspeiseweichen zur Umgehung der Verstärker für den Fernspeisestrom. Zur Fehlerortung dient eine Vorrichtung zur Gleichstromfehlerortung, deren Auswertungsergebnisse an eine zentrale Sendestelle übertragen werden. Außerdem werden in den einzelnen Zwischenverstärkern erzeugte Kennfrequenzen zur Auswertung an die Fernspeisestelle gegeben.

Ferner ist aus der DE-OS 23 46 834 bereits ein in mehreren Ebenen gegliedertes und an seinen Ausläufern stark verzweigtes Breitband-Kabelnetz bekannt, das mit einer Einrichtung zur Fernspeisung versehen ist.

Verteilnetze der genannten Art sind für eine Signalübertragung innerhalb eines vorgegebenen Frequenzbereiches ausgelegt, der die Übertragung einer vorgegebenen Zahl von Fernseh- und/oder Rundfunkprogrammen gestattet.

Reicht die Übertragungskapazität der Einrichtung nicht mehr aus, so kann man die Einrichtung durch eine solche mit der gewünschten erhöhten Übertragungskapazität ersetzen. Dies ist jedoch insbesondere dann mit einem relativ großen Aufwand verbunden, wenn in erheblichen Umfange Hilfseinrichtungen der genannten Art in die bestehende Einrichtung integriert sind.

Überlegungen im Rahmen der Erfindung haben jedoch ergeben, daß es bei der gewünschten Erweiterung der Übertragungskapazität vorteilhaft ist, die passiven Teile der vorhandenen Einrichtung jeweils im Bereich vom elektrischen Verteiler hinter dem letzten Verstärker bis zum Übergabepunkt für die erhöhte Übertragungskapazität zu verwenden und in den Bereichen vor diesem Teil der Einrichtung ein ergänzendes Lichtwellenleiternetz zu installieren.

Ausgehend von diesen Überlegungen ist es Aufgabe der Erfindung, eine Einrichtung zur Verteilung von Breitbandsignalen über ein verzweigtes Koaxialkabelnetz, die für die Übertragung der zu verteilenden Breitbandsignale ein nicht, insbesondere nicht mehr ausreichendes frequenzband zur Verfügung stellt so zu ergänzen, daß sie für eine Verteilung zusätzlicher Breitbandsignale geeignet ist.

Gemäß der Erfindung wird die Einrichtung zur Lösung dieser Aufgabe in der im kennzeichnenden Teil des Patentanspruchs 1 angegebenen Weise ausgebildet. Dabei ergibt sich, daß die passiven Teile des koaxialen Netzes vom elektrischen Verteiler hinter dem letzten Verstärker bis zum teilnehmerseitigen Übergabepunkt jeweils für beide Frequenzbänder gemeinsam verwendet werden.

Durch die erfindungsgemäßen Maßnahmen ergibt sich der Vorteil, daß eine bestehende Einrichtung zur Verteilung von Breitbandsignalen dadurch in besonders wirtschaftlicher Weise hinsichtlich ihrer Übertragungskapazität erweitert werden kann, daß die vorhandene Einrichtung zur Breitbandkommunikation, Fernsehprogrammverteilung oder dergleichen in besonders großem Umfange weiter Verwendung finden kann.

Gemäß Anspruch 1 befinden sich die Enden des Lichtwellenleiternetzes jeweils in einer der Verstärkerpunkte. Dabei können an das betreffende Ende ein oder mehrere Endverstärker angeschlossen sein. Gegebenenfalls können an einen Verstärkerpunkt, an dem das Lichtwellenleiternetz endet, ein oder mehrere Endverstärker über Koaxialkabel angeschlossen sein.

Die Weiterbildung der Erfindung gemäß Anspruch 2 hat den Vorteil, daß vorhandene passive Anordnungen zur Signalverteilung bei der Erweiterung eines vorhandenen Koaxialkabelnetzes unverändert beibehalten werden können, wenn die daraus resultierende Vergrößerung der Übertragungskapazität ausreicht.

Die Maßnahmen nach Anspruch 3 haben den Vorteil, daß ein vorhandener Endverstärker weiter Verwendung finden kann und ein ergänzender Verstärker nur das zusätzlich zu verteilende Frequenzband zu verstärken braucht.

Andererseits kann die Weiterbildung nach Anspruch 4 sich insbesondere dann als zweckmäßig erweisen, wenn in dem betreffenden Endverstärkerpunkt das Raumangebot und/oder die verfügbare Fernspeiseleistung nicht für zwei Verstärker ausreichen. Dabei ist der letzte Verstärker in der Verstärkerkette so ausgelegt, daß er beide Frequenzbänder gemeinsam verstärkt und den passiven Teil bis zum Übergabepunkt, insbesondere bis zum Hausübergabepunkt speist.

Ausgehend von einem Breitbandkommunikationsnetz in Koaxialkabeltechnik, dessen Frequenzbereich von 47 MHz bis 450 MHz reicht, hat der Frequenzbereich der zusätzlich zu verteilenden Breitbandsignale vorzugsweise die in Anspruch 5 angegebenen Grenzen.

Vorteilhafte Ausgestaltungen der Einrichtung in Verbindung mit der Verteilung der zusätzlichen Breitbandsignale gehen aus den Ansprüchen 6 bis 8 hervor. Bei ein und demselben Lichtwellenleiternetz können alle jene Varianten gemeinsam oder zum Teil vorgesehen sein.

Bei der Weiterbildung nach Anspruch 6 speist zweckmäßigerweise jeder der opto-elektrischen Wandler einen elektrischen Verteiler. Bei der Einrichtung nach Anspruch 8 speist zweckmäßigerweise jeder der Verstärker für das obere Frequenzband über eine elektrische Weiche mit dem unteren Frequenzband zusammen den passiven Teil bis zum Übergabepunkt. Freie Verstärkerausgänge für das obere Frequenzband können ggf. zu benachbarten Verstärkerpunkten geführt werden.

Die Maßnahmen nach Anspruch 8 sind von Vorteil, wenn entferntere Verstärkerpunkte gespeist werden sollen.

Besonders vorteilhaft läßt sich die Einrichtung dann verwenden, wenn in Verbindung mit einem bestehenden Koaxial-Breitbandkommunikationsnetz zusätzliche Fernsehprogramme verteilt werdensollen.

Die Erfindung wird anhand der in den Figuren dargestellten Ausführungsbeispiele näher erläutert.

Es zeigen
- Fig. 1: eine Einrichtung zur Verteilung von Breitbandsignalen über eine Koaxialkabelnetz und ein diesem überlagertes Lichtwellenleiternetz
- Fig. 2: ein Koaxialkabelnetz vor der Überlagerung durch ein Lichtwellenleiternetz,
- Fig. 3: ein Verstärkerpunkt mit zwei Endverstärkern,
- Fig. 4: ein Verstärkerpunkt mit einem Endverstärker,
- Fig. 5: einen Frequenzplan für eine Übertragung von etwa 50 Fernsehprogrammen und
- Fig. 6: einen Frequenzplan für eine Übertragung von etwa 70 Fernsehprogrammen

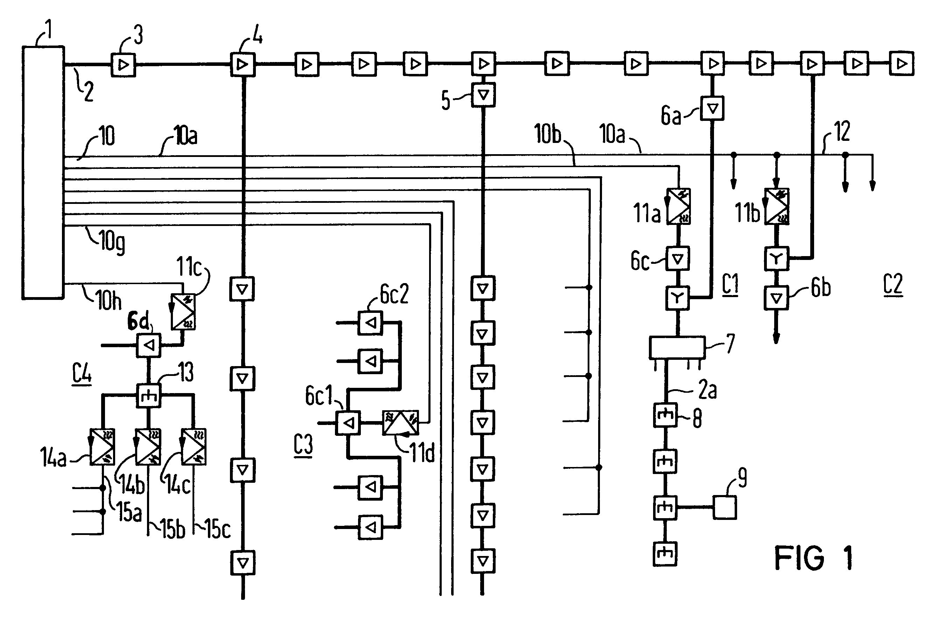

Die in Figur 1 gezeigte Einrichtung dient zur Verteilung von Fernseh- und Rundfunkprogrammen. Die Verteilung erfolgt über das mehrere Netzebenen enthaltende verzweigte Koaxialkabelnetz 2 und das zusätzlich vorgesehene Lichtwellenleiternetz 10.

Die Kopfstelle 1 dient zur Einspeisung der zu verteilenden Signale in das Koaxialkabelnetz 2 und in das Lichtwellenleiternetz 10. Gegebenenfalls kann eine eigene Kopfstelle zur Einspeisung der zusätzlich zu verteilenden Breitbandsignale vorgesehen sein.

Das Koaxialkabelnetz 2 enthält eine Vielzahl von Verstärkerpunkten mit Breitbandverstärkern zur Verstärkung der zu verteilenden Breitbandsignale. Diese Breitbandverstärker sind mit Hilfseinrichtungen versehen, wie sie bei Einrichtungen zur Verteilung von Fernsehsignalen üblich sind. Jene Hilfseinrichtungen sind daher in der Zeichnung nicht näher dargestellt.

Die Einrichtung enthält in einem Teil der Verstärkerpunkte elektrische Endverstärker 6a. Der Ausgang der Endverstärker 6a ist jeweils über eine passive Anordnung zur Signalverteilung an einen ebenfalls passiven Hausübergabepunkt 9 geführt, in den alle zur Verteilung gelangenden Signale oder ein wählbarer Teil dieser Signale an einen Teilnehmer übergeben werden.

Das Lichtwellenleiternetz enthält die an die Kopfstelle 1 angeschlossenen Lichtwellenleiter 10a...10h. Das Lichtwellenleiternetz 10 endet jeweils an einem der Verstärkerpunkte, d. h. am Ort eines dort im Koaxialkabelnetz 2 vorgesehenen Breitbandverstärkers. Die Enden des Lichtwellenleiternetzes sind jeweils über einen opto-elektrischen Wandler 11a...11d an einen oder mehrere der Endverstärker 6a, 6b des Koaxialkabelnetzes 2 geführt.

Am Ort C1 der Einrichtung wurde der Endverstärker 6c des Koaxialkabelnetzes 2 beibehalten. Seine Bandbreite umfaßt von den beiden vorgesehenen Frequenzbändern nur das untere. Der optoelektrische Wandler 11a ist in diesem Fall über den eigenen Verstärker 6c mit dem Ausgang des Endverstärkers 6a verbunden.

Bei der Verstärkerstelle C2 wurde der Endverstärker des Koaxialkabelnetzes 2 durch den breitbandigeren Verstärker 6b ersetzt, dessen Bandbreite die beiden vorgesehenen Frequenzbänder umfaßt. Der opto-elektrische Wandler 11b ist in diesem Fall mit einem Eingang des Endverstärkers 6b verbunden.

In Figur 1 sind mehrere zweckmäßige Ausgestaltungen von Knotenpunkten des Lichtwellenleiternetzes 10 gezeigt.

Der Lichtwellenleiter 10a speist den in einem der Verstärkerpunkte untergebrachten passiven optischen Verteiler 12 mit dem oberen Frequenzband. An den optischen Verteiler 12 sind der Endverstärkerpunkt C2 und weitere, nicht dargestellte Endverstärkerpunkte angeschlossen. Dabei ist unter einem Endverstärkerpunkt ein Verstärkerpunkt mit Endverstärker zu verstehen.

Der Lichtwellenleiter 10g führt zu den in einem Endverstärkerpunkt angeordneten opto-elektrischen Wandler 11d, an den der elektrische Verstärker 6c1 für das obere Frequenzband angeschlossen ist. Dieser Verstärker 6c1 hat drei Ausgänge, von denen zwei an je zwei weitere Verstärker 6c2 für das obere Frequenzband geführt sind. Zwei Verstärkerausgänge 6c2 werden im eigenen Endverstärkerpunkt benutzt, wobei der Ausgang des betreffenden Verstärkers für das obere Frequenzband und der betreffende Endverstärker des Koaxialkabelnetzes 2 über eine Weiche an einen gemeinsamen Verteiler geführt sind. Die weiteren Ausgänge der Verstärker 6c1 und 6c2 sind z.B. an nicht dargestellte Endverstärkerpunkte des koaxialen Netzes 2 geführt.

Der Lichtwellenleiter 10h ist an den opto-elektrischen Wandler 11c des Endverstärkerpunktes C4 geführt. An den Ausgang des opto-elektrischen Wandlers 11c ist der Breitbandverstärker 6d angeschlossen. Ein erster Ausgang des Breitbandverstärkers 6c ist über die Gabel 13 an die elektrooptischen Wandler 14a...14c geführt, deren Ausgänge über je einen der weiteren Lichtwellenleiter 15a...15c an weitere Endverstärkerpunkte geführt sind. An den Lichtwellenleiter 15a ist ein weiterer optischer Verzweiger angeschlossen. Der freie Ausgang des Breitbandverstärkers 6d und ein Endverstärker des Endverstärkerpunktes C4 werden zeckmäßigerweise über eine Weiche an einen gemeinsamen Verteiler geführt.

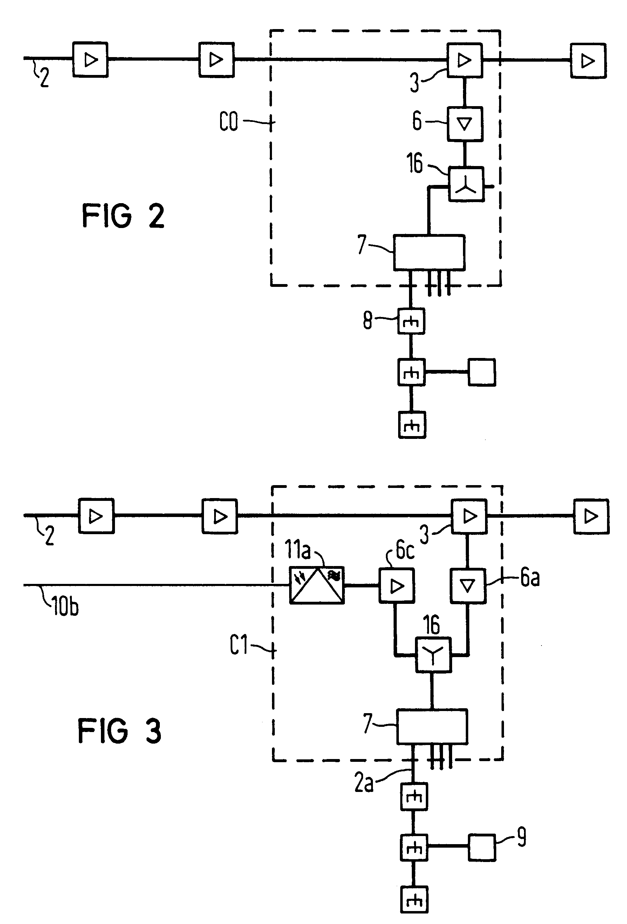

Figur 2 zeigt einen Ausschnitt aus einem zu erweiternden Koaxialkabelnetz. In einem Zweig des Koaxialkabelnetzes 2 sind mehrere Breitbandverstärker in Kette geschaltet, die einer ersten oder zweiten Netzebene A bzw. B angehören können. Einer dieser Verstärker 3 ist mit einem zusätzlichen Ausgang an den Endverstärker 6 geführt. Der Ausgang dieses Endverstärkers 6 ist mit dem Scheitel des Zweifach-Verzweigers 16 verbunden. Einer der beiden Ausgänge des Zweifach-Verzweigers ist an den C-Verteiler 7 der C-Ebene geführt. Der A-bzw. B-Breitbandverstärker 3, der C-Verstärker 6, der C-Zweifach-Verzweiger 16 und der C-Verteiler 7 bilden den Verstärkerpunkt CO.

Der C-Verteiler 7 hat mehrere Ausgänge, die über Abzweigeeinrichtungen an jeweils mehrere Hausübergabepunkte geführt sind. Die an einen der Ausgänge des C-Verteilers 7 angeschlossene Abzweigeinrichtung besteht aus einer Kettenschaltung mehrerer Abzweiger 8.

Figur 3 zeigt den in Figur 2 dargestellten Ausschnitt nach Ergänzung des Koaxialkabelnetzes durch das Lichtwellenleiternetz.

Der am Ausgang des C-Verstärkers 6a befindliche C-Zweifach-Verzweiger 16 ist nicht mehr mit einem der beiden Zweige, sondern mit seinem Scheitel an den Eingang des C-Verteilers 7 geführt. Einer der beiden Zweige des C-Abzweigers 16 ist mit dem C-Verstärker 6a, der andere Zweig des C-Abzweigers 16 mit dem zusätzlichen Verstärker 6a für das obere Frequenzband verbunden.

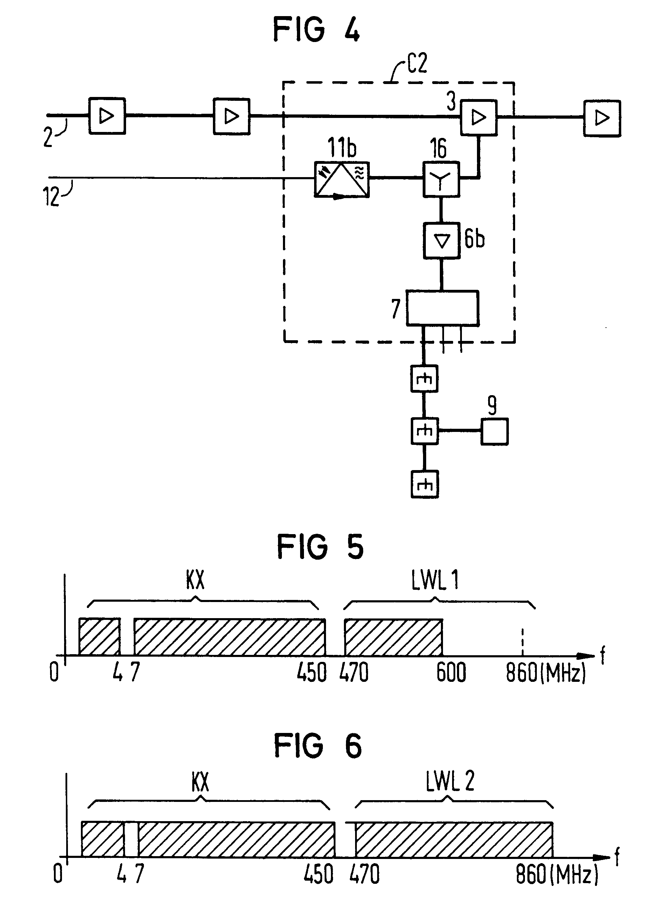

Figur 4 zeigt den in Figur 2 dargestellten Ausschnitt nach Ergänzung des Koaxialkabelnetzes durch das Lichtwellenleiternetz. Der nach Fig. 2 ursprünglich am Ausgang des G-Verstärkers 6 befindliche C-Zweifach-Verzweiger 16 ist mit seinem Scheitel an den Eingang des C-Verstärkers 6b geführt. Einer der beiden Zweige des C-Verzweigers 16 ist mit dem A- bzw. B-Verstärker 3, der andere Zweig des C-Verzweigers 16 mit dem opto-elektrischen Wandler 11b verbunden.

Figur 5 zeigt einen ersten Frequenzplan für die in den Figuren 1, 3 und 4 gezeigte Einrichtung zur Verteilung von Breitbandsignalen. Im Bereich 47 bis 450 MHz werden 24 bzw. 26 PAL-Kanäle und 12 D2-MAG-Kanäle zur Fernsehprogrammübertragung untergebracht. Ferner sind in diesem Band eine Reihe von Rundfunkkanälen zusätzlich untergebracht. Außerdem werden über das Koaxialkabelnetz Dienstleitungen, Überwachungskanäle und Breitbandkommunikations-Rückkanäle übertragen.

Ergänzend zu den genannten Übertragungsbändern KX des Koaxialkabelnetzes werden mit Hilfe des überlagerten Lichtwellenleiternetzes 12 PAL-Kanäle im Frequenzbereich 470 bis etwa 600 MHz des Frequenzbereiches LWL1 übertragen.

Der Frequenzplan nach Figur 6 stimmt mit dem nach Figur 5 hinsichtlich des Frequenzbandes KX überein. Abweichend werden über das Lichtwellenleiternetz etwa 35 PAL-Kanäle zusätzlich übertragen. Das obere Frequenzband reicht dabei von 470 bis 860 MHz.

Die Kopfstelle enthält nicht dargestellte elektro-optische Wandler, die das obere Frequenzband entsprechend linear umsetzen. Vorzugsweise finden dabei DFB (distributed feedback)-Laser mit optischem Isolator Verwendung. Als Übertragungsverfahren kommt insbesonodere Amplitudenmodulation mit Restseitenband zur Anwendung. Als opto-elektrische Wandler sind PIN-Dioden-Empfänger geeignet.

## Patentansprüche

1. Einrichtung zur Verteilung von einem in einem vorgegebenen Frequenzband Fernseh- und/oder Rundfunksignale enthaltendem Breitbandsignal über ein über mehrere Netzebenen verzweigtes Koaxialkabelnetz (2) mit wenigstens einer Kopfstelle (1) zur Einspeisung der zu verteilenden Signale in das Koaxialkabelnetz (2) und mit einem zusätzlichen Lichtwellenleiternetz (10) mit wenigstens einer Kopfstelle (1) zur Einspeisung zusätzlich zu verteilender Breitbandsignale, dessen Enden jeweils zu einem optoelektronischen Wandler (11a...11b) geführt sind,
**dadurch gekennzeichnet,**
daß das Koaxialkabelnetz (2) Breitbandverstärker und wenigstens zum Teil Hilfseinrichtungen enthaltende Verstärkerpunkte aufweist, wobei einige der Verstärkerpunkte elektrische Endverstärker (6a) enthalten können, deren Ausgang über eine passive Anordnung zur Signalverteilung (7, 8) an passive Übergabepunkte zur Übergabe wenigstens eines Teiles der zu verteilenden Signale geführt sind, bei dem die Enden des Lichtwellenleiternetzes (10) zu jeweils in einem der Verstärkerpunkte enthaltenen und mit wenigstens einem der Endverstärker (6a, 6b) verbundenen optoelektrischen Wandler (11a-11d) geführt sind und daß die in das Lichtwellenleiternetz (10) eingespeisten Signale ein Frequenzband umfassen, das nach der optoelektrischen Wandlung oberhalb des über das Koaxialkabelnetz (2) übertragenen Frequenzbandes liegt.

2. Einrichtung nach Anspruch 1,
**dadurch gekennzeichnet**,
daß die obere Grenze des oberen Frequenzbandes derart gewählt ist, daß das obere Frequenzband durch die passive Anordnung zur Signalverteilung (7, 8), und die passiven Übergabepunkte eines vorhandenen Koaxialkabelnetzes übertragbar ist.

3. Einrichtung nach Anspruch 1 oder 2,
**dadurch gekennzeichnet**,
daß an wenigstens einer Stelle der Einrichtung die Bandbreite des Endverstärkers (6a) von den beiden Frequenzbändern nur das untere umfaßt und der opto-elektrische Wandler (11a) über einen eigenen Verstärker (6c) mit dem Ausgang des Endverstärkers (6a) verbunden ist.

4. Einrichtung nach einem der Ansprüche 1 bis 3,
**dadurch gekennzeichnet**,
daß an wenigstens einer Stelle der Einrichtung die Bandbreite des Endverstärkers (6b) beide Frequenzbänder umfaßt und der opto-elektrische Wandler (11b) mit einem Eingang des Endverstärkers (6b) verbunden ist.

5. Einrichtung nach einem der Ansprüche 1 bis 4,
**dadurch gekennzeichnet**,
daß das untere Frequenzband den Bereich von 47 MHz bis 450 MHz umfaßt und das obere Frequenzband bei 470 MHz beginnt und bei einer Frequenz endet, die mindestens etwa 600 MHz und höchstens etwa 860 MHz beträgt.

6. Einrichtung nach einem der Ansprüche 1 bis 5,
**dadurch gekennzeichnet**,
daß das Lichtwellenleiternetz (10) wenigstens einen an einer der Verstärkerpunkten endenden und einen passiven optischen Verteiler (12) mit dem Frequenzband speisenden Lichtwellenleiter (10a) enthält und daß die Ausgänge des optischen Verteilers (12) jeweils an einen opto-elektrischen Wandler geführt sind.

7. Einrichtung nach einem der Ansprüche 1 bis 6,
**dadurch gekennzeichnet**,
daß das Lichtwellenleiternetz (10) wenigstens einen über einen Lichtwellenleiter (10g) mit dem oberen Frequenzband gespeisten opto-elektrischen Wandler (11d) enthält, an den mehrere elektrische Verstärker (6c) für das obere Frequenzband angeschlossen sind, und daß jeweils einer dieser Verstärker (6c) und einer der Endverstärker an einen gemeinsamen Verteiler (7) geführt sind.

8. Einrichtung nach einem der Ansprüche 1 bis 7,
**dadurch gekennzeichnet**,
daß an wenigstens einen Lichtwellenleiter (10h) des Lichtwellenleiternetzes (10) eine Kettenschaltung aus einem opto-elektrischen Wandler (11c), einem elektrischen Verstärker (6d) für das obere Frequenzband und einem elektrischen Verteiler (13) angeschlossen ist, und daß die Ausgänge des elektrischen Verteilers (13) mit je einem elektro-optischen Wandler (14a...14c) verbunden sind, dessen Ausgang über wenigstens einen weiteren Lichtwellenleiter (15a...15d) an einen anderen der Verstärkerpunkte geführt ist.

9. Einrichtung nach Patentansprüchen 1 oder 2,
**dadurch gekennzeichnet**,
daß wenigstens bei einem der Endverstärker (6b) des Koaxialkabelnetzes ein dort bisher mit dem Ausgang des C-Verstärkers (6b) verbundener C-Zweifach-Verzweiger (16) so umgeschaltet ist, daß dessen Scheitel an den Eingang des C-Verstärkers (6b) geführt ist, daß der eine Zweig des C-Verzweigers (16) mit dem Ausgang des A- bzw. B-Verstärkers (3) und der andere Zweig des C-Verzweigers (16) mit dem optoelektrischen Wandler (11b) verbunden ist und so der Verzweiger die Funktion einer Weiche zur Einspeisung des oberen Frequenzbandes in die Signalübertragungswege übernimmt.

## Claims

1. System for distributing a broadband signal containing television and/or radio signals in a given frequency band over a coaxial cable network (2) branched over a plurality of network levels, having at least one head end (1) for inserting the signals to be distributed into the coaxial cable network (2) and having an additional optical fibre network (10) having at least one head end (1) for inserting broadband signals to be additionally distributed, the ends of which are connected in each case to an optoelectronic transducer (11a...11d), characterized in that the coaxial cable network (2) has broadband amplifiers and repeater stations containing at least in part auxiliary equipment, it being possible for some of the repeater stations to contain electrical output amplifiers (6a), the outputs of which are connected via a passive arrangement for signal distribution (7, 8) to passive interconnection points for transferring at least a portion of the signals to be distributed, in which the ends of the optical fibre network (10) are connected to optoelectrical transducers (11a-11d) in each case contained in one of the repeater stations and connected to at least one of the output amplifiers (6a, 6b), and in that the signals inserted into the optical fibre network (10) cover a frequency band which, after the optoelectrical conversion, lies above the frequency band transmitted over the coaxial cable network (2).

2. System according to Claim 1, characterized in that the upper limit of the high frequency band is selected in such a way that the high frequency band can be transmitted via the passive arrangement for signal distribution (7,8) and the passive interconnection points of an existing coaxial cable network.

3. System according to Claim 1 or 2, characterized in that, at at least one point of the system, the bandwidth of the output amplifier (6a) covers only the low band of the two frequency bands, and the optoelectrical transducer (lla) is connected via its own amplifier (6c) to the output of the output amplifier (6a).

4. System according to one of Claims 1 to 3, characterized in that, at at least one point of the system, the bandwidth of the output amplifier (6b) covers both frequency bands, and the optoelectrical transducer (llb) is connected to one input of the output amplifier (6b).

5. System according to one of Claims 1 to 4, characterized in that the low frequency band covers the range from 47 MHz to 450 MHz, and the high frequency band begins at 470 MHz, and ends at a frequency which is at least approximately 600 MHz and at most approximately 860 MHz .

6. System according to one of Claims 1 to 5, characterized in that the optical fibre network (10) contains at least one optical fibre (10a) that ends at one of the repeater stations and feeds one passive optical splitter (12) with the frequency band, and in that the outputs of the optical splitter (12) are in each case connected to an optoelectrical transducer.

7. System according to one of Claims 1 to 6, characterized in that the optical fibre network (10) contains at least one optoelectrical transducer (lld) fed via an optical fibre (10g) with the high frequency band, to which tranducer a plurality of electric amplifiers (6c) for the high frequency band are connected, and that in each case one of these amplifiers (6c) and one of the output amplifiers are connected to a common splitter (7).

8. System according to one of Claims 1 to 7, characterized in that a cascade connection of an optoelectrical transducer (11c), an electric amplifier (6d) for the high frequency band and a power splitter (13) is connected to at least one optical fibre (10h) of the optical fibre network (10), and in that the outputs of the power splitter (13) are connected to in each case one electrooptical transducer (14a...14c), the output of which is connected via at least one further optical fibre (15a...15d) to another repeater station.

9. System according to Claims 1 or 2, characterized in that, at least in one of the output amplifiers (6b) of the coaxial cable network, a C two-way splitter/combiner (16) previously connected there to the output of the C amplifier (6b) is switched over in such a way that its apex is connected to the input of the C amplifier (6b), and in that one branch of the C splitter/combiner (16) is connected to the output of the A or B amplifier (3) and the other branch of the C amplifier (16) is connected to the optoelectrical transducer (11b), and the splitter/combiner thus takes over the function of a filter for inserting the high frequency band into the signal transmission paths.

## Revendications

1. Dispositif de répartition d'un signal large bande, qui contient des signaux de télévision et/ou de radio dans une bande prescrite de fréquences, sur un réseau (2) à câbles coaxiaux ramifié en plusieurs plans de réseaux, ce dispositif comportant au moins un poste (1) de tête destiné à introduire dans le réseau (2) à câbles coaxiaux les signaux à répartir et comportant un réseau supplémentaire (10) à fibre optique ayant au moins un poste (1) de tête destiné à introduire, en plus, des signaux large bande à répartir, les extrémités de ce réseau supplémentaire à fibre optique étant chacune reliées à un convertisseur (11a ... 11b) opto-électronique,
caractérisé en ce que
le réseau (2) à câbles coaxiaux comporte des amplificateurs large bande et au moins des points amplificateurs comprenant en partie des dispositifs auxiliaires, quelques uns des points amplificateurs pouvant comprendre des amplificateurs (6a) électriques d'extrémité, dont les sorties sont reliées par l'intermédiaire d'un dispositif passif de répartition (7, 8) de signaux à des points passifs de prise en charge d'au moins une partie des signaux à répartir, les extrémités du réseau (10) à fibre optique sont connectées chacune à un convertisseur (11a ... 11d) opto-électrique compris dans un des points amplificateurs et relié à au moins un des amplificateurs (6a, 6b) d'extrémité et les signaux introduits dans le réseau (10) à fibre optique ont une bande de fréquence, qui est, après la conversion opto-électrique, au-dessus de la bande de fréquences transmise par l'intermédiaire du réseau (2) à câbles coaxiaux.

2. Dispositif suivant la revendication 1, caractérisé en ce que la limite supérieure de la bande supérieure de fréquences est choisie de sorte que la bande supérieure de fréquences puisse être transmise par le dispositif passif de répartition (7, 8) de signaux et par les points passifs de prise en charge d'un réseau présent à câbles coaxiaux.

3. Dispositif suivant la revendication 1 ou 2, caractérisé en ce que en au moins un endroit du dispositif, la largeur de bande de l'amplificateur (6a) d'extrémité ne comprend, parmi les deux bandes de fréquences, que la bande inférieure et le convertisseur (11a) opto-électrique est relié par l'intermédiaire d'un amplificateur (6c), qui lui est propre, à la sortie de l'amplificateur (6a) d'extrémité.

4. Dispositif suivant l'une des revendications 1 à 3, caractérisé en ce que à au moins un endroit du dispositif la largeur de bande de l'amplificateur (6b) d'extrémité comprend deux bandes de fréquences et le convertisseur (11b) opto-électrique est relié à une entrée de l'amplificateur (6b) d'extrémité.

5. Dispositif suivant l'une des revendications 1 à 4, caractérisé en ce que la bande inférieure de fréquences comprend le domaine de 47 MHz à 450 MHz et la bande supérieure de fréquences commence à 470 MHz et se termine à une fréquence, qui est d'au moins environ 600 MHz et au plus environ 860 MHz.

6. Dispositif suivant l'une des revendications 1 à 5, caractérisé en ce que le réseau (10) à fibre optique comprend au moins une fibre optique (10a) se terminant à l'un des points amplificateurs et alimentant un répartiteur (12) optique passif par la bande de fréquence et les sorties du répartiteur (12) optique sont chacune reliées à un convertisseur opto-électrique.

7. Dispositif suivant l'une des revendications 1 à 6, caractérisé en ce que le réseau (10) à fibre optique comprend au moins un convertisseur (11d) opto-électrique qui est alimenté par l'intermédiaire d'une fibre optique (10g) par la bande supérieure de fréquences, et auquel plusieurs amplificateurs (6c) électriques pour la bande supérieure de fréquences sont connectés et un de ces amplificateurs (6c) et un des amplificateurs d'extrémité est connecté à un répartiteur (7) commun.

8. Dispositif suivant l'une des revendications 1 à 7, caractérisé en ce que il est connecté à au moins une fibre optique (10h) du réseau (10) à fibre optique un circuit en chaîne constitué d'un convertisseur (11c) opto-électrique, d'un amplificateur électrique (6d) pour la bande supérieure de fréquences et d'un répartiteur (13) électrique et les sorties du répartiteur électrique (13) sont chacune reliées à un convertisseur (14a ... 14c) électro-optique, dont la sortie est connectée par l'intermédiaire d'au moins une autre fibre optique (15a ... 15d) à un autre des points amplificateurs.

9. Dispositif suivant la revendication 1 ou 2, caractérisé en ce que au moins dans un des amplificateurs (6b) d'extrémité du réseau à câbles coaxiaux, on change le branchement d'une boîte (16) de jonction C à deux branches reliée à la sortie de l'amplificateur (6b) C, de sorte que le tronc de cette boîte de jonction C soit connecté à l'entrée de l'amplificateur (6b) C, que l'une des branches de la boîte (16) de jonction C soit reliée à la sortie de l'amplificateur (3) A ou B et que l'autre branche de la boîte (16) de jonction C soit reliée au convertisseur (11b) opto-électrique et qu'ainsi la boîte de jonction ait la fonction d'un dispositif d'aiguillage introduisant la bande supérieure de fréquences dans les voies de transmission de signaux.
